# EUROPÄISCHE PATENTSCHRIFT

(11) **EP 1 326 692 B1**
(45) Veröffentlichungstag und Bekanntmachung des Hinweises auf die Patenterteilung: **06.12.2006**
(21) Anmeldenummer: 01986271.3
(22) Anmeldetag: 05.10.2001
(51) Int. Cl.: B01D 29/01, B01D 29/05, B01D 35/26

(54) **VORRICHTUNG ZUM REINIGEN VON FLÜSSIGKEITEN**
DEVICE FOR PURIFYING LIQUIDS
DISPOSITIF POUR PURIFIER DES LIQUIDES

(30) Priorität: 05.10.2000 DE 10049635
(43) Veröffentlichungstag der Anmeldung: 16.07.2003
(73) Patentinhaber: Schmidt, Ivona, 78532 Tuttlingen (DE); Schmidt, Andreas, 78352 Tuttlingen (DE); Combrowski, Zbiginiew, 78352 Tuttlingen (DE)
(72) Erfinder: Schmidt, Ivona, 78532 Tuttlingen (DE); Schmidt, Andreas, 78352 Tuttlingen (DE); Combrowski, Zbiginiew, 78352 Tuttlingen (DE)
(74) Vertreter: Weiss, Peter
(86) Internationale Anmeldenummer: PCT/EP2001/011505
(87) Internationale Veröffentlichungsnummer: WO 2002/028505

(56) Entgegenhaltungen:
- US-A- 3 356 218
- US-A- 3 415 181
- US-A- 3 447 685

## Beschreibung

Die Erfindung betrifft eine Vorrichtung zum Reinigen von Flüssigkeiten, insbesondere von Speiseölen, mittels eines Filters in einem Filtergehäuse, wobei der Filter einer Pumpe nachgeschaltet ist, und in einem Gehäuse ein Motor zum Antreiben der Pumpe vorgesehen ist, die einen Rotor mit einer Rotorscheibe in einem Tauchgehäuse aufweist, wobei das Gehäuse, Tauchgehäuse und Filtergehäuse zusammen eine Einheit bilden und zumindest teilweise in die zu reinigende Flüssigkeit einsetzbar und aus dieser entfernbar sind, wobei das Tauchgehäuse über einen Schacht mit dem Filtergehäuse verbunden ist.

Es gibt im privaten oder auch im industriellen Bereich eine Vielzahl von Flüssigkeiten, die gereinigt werden müssen. Hierzu zählen beispielsweise Kühl- oder Schmiermittelbäder bei Werkzeugmaschinen oder auch Speiseöle z.B. aus Friteusen. Dies sind nur wenige Beispiele, die Erfindung soll sich jedoch auf alle möglichen zu reinigenden Flüssigkeiten beziehen.

In der Regel wird die Flüssigkeit von Zeit zu Zeit aus einem Speichertank entnommen und einer Vorrichtung zum Reinigen dieser Flüssigkeit zugeleitet. Von dort gelangt dann die Flüssigkeit wieder zurück zum Speichertank. Oftmals wird auch nur die Oberfläche der Flüssigkeit abgesaugt, damit die aufschwimmenden leichten Stoffe entfernt werden. Die schwereren Verschmutzungspartikel werden dann von Zeit zu Zeit, nachdem sie sich abgesetzt haben, nach unten entnommen.

Die vorliegende Erfindung bezieht sich vor allem auf Öle, die aus Friteusen stammen. Üblicherweise werden auch diese Öle abgesaugt, filtriert und in die Friteuse zurückgepumpt. Dabei wird vor dem Filtrieren noch ein Reinigungspulver in das Medium eingestreut, beispielsweise Kieselgur.

Die Reinigung der Öle und Fette ist deshalb wichtig, weil theoretisch bei vollkommener Reinigung die Öle und Fette immer wieder verwendet werden können. Bei einem Preis von etwa DM 2.- pro Liter Fritierfett und einer Standzeitverringerung um das fünf- bis zehnfache kann sich ein Filtrationssystem innerhalb weniger Monate amortisieren.

Vorrichtungen der o. g. Art sind bspw. aus der US 3,356,218, US 3,447,685 und insbesondere aus der US 3,415,181 bekannt. Dabei wird das zu reinigende Ö1 mittels einer Pumpe vom Boden weg angesaugt und seitlich aus der Pumpe in eine Steigleitung ausgestossen. Dieser Steigleitung ist ein Filter nachgeschaltet, durch den die zu reinigende Flüssigkeit durchtritt, um dann über eine Rückleitung wieder zurück in das Bad zu gelangen.

Aus der US 3 172 850 ist ferner eine Vorrichtung der o.g. Art bekannt, bei dem sowohl das Tauchgehäuse mit dem Pumpenrotor als auch der Filter zumindest teilweise in die zu reinigende Flüssigkeit einsetzbar ist.

Der vorliegenden Erfindung liegt die Aufgabe zugrunde, eine Vorrichtung zu schaffen, mit welcher die Flüssigkeit wesentlich einfacher, schneller und gegebenenfalls ohne Zugabe von Reinigungspulver gereinigt wird.

Zur Lösung dieser Aufgabe führt, dass der Rotor mit Flügeln zum Ansaugen der Flüssigkeit durch Ausnehmungen in der Rotorscheibe und zum Weiterdrücken der Flüssigkeit in den Schacht besetzt ist, wobei zwischen Schacht und Filter ein Vorraum in dem Filtergehäuse ausgebildet und dieses Filtergehäuse dem Tauchgehäuse entfernbar zugeordnet ist.

Der wesentliche Vorteil der vorliegenden Erfindung liegt darin, dass jetzt nicht mehr das Öl abgesaugt und dem Filter zugeführt werden muss, sondern dass die Reinigung der Flüssigkeit in dem Flüssigkeitsbad selbst erfolgt, In diesem Fall kann eine wesentlich einfachere Vorrichtung benutzt werden, die mit nur wenigen Elementen auskommt. Sie ist deshalb auch wesentlich preisgünstiger und leichter zu handhaben. Insgesamt wird ein Handgerät geschaffen, welches sowohl im Haushalt aber insbesondere auch im Gaststättengewerbe leicht Anwendung finden kann.

Die gesamte Vorrichtung besteht aus drei Gehäusen, welche die wesentlichen Funktionsteile beinhalten. Diese Gehäuse sind so miteinander gekoppelt, dass sie auch schnell auseinander genommen werden können, wodurch die Reinigung erleichtert wird. Zu diesem Zwecke sind die Gehäuse miteinander durch Schnellspannelemente, beispielsweise durch Schnellspannmuttern verbunden. Die Gehäuse können auch zumindest teilweise ineinander geschoben sein.

In einem Gehäuse soll die gesamte Elektronik und der Antrieb der Pumpe aufgenommen sein. D.h, in diesem Gehäuse befinden sich der Motor, die Elektronik und entsprechende Bedienelemente. Dieses Gehäuse braucht nicht in die Flüssigkeit eingetaucht zu werden, weshalb es bevorzugt auf einem Tauchgehäuse aufgesetzt ist. Das Tauchgehäuse dagegen wird in die Flüssigkeit eingesetzt.

In diesem Tauchgehäuse befindet sich ein Rotor, mit dem die Flüssigkeit angesaugt und zum Filtergehäuse weiter transportiert wird. Der Rotor steht über eine entsprechende Stange mit dem oben genannten Motor in dem aufsitzenden Gehäuse in Verbindung. Ferner sind einer Rotorscheibe des Rotors Flügel aufgesetzt, die beliebige Form und Konfiguration aufweisen können. Wichtig ist nur, dass diese Flegel Flüssigkeit ansaugen und in den Schacht zu dem Filtergehäuse weiter drücken.

Die Rotorscheibe bildet zusammen mit einer Zwischenwand in dem Tauchgehäuse und einem die Rotorscheibe umfangenden Ring ein fast geschlossenes Gehäuse, wobei nur in der Rotorscheibe Ausnehmungen vorgesehen sind. Durch diese Ausnehmungen wird die Flüssigkeit in den Raum eingesaugt und durch einen Austritt in den oben erwähnten Schacht weitergegeben.

In einem anderen Ausführungsbeispiel dreht der Rotor der Pumpe in Ausnehmungen eines Blechpaketes. Dieses Blechpaket besteht aus mehreren aufeinander geschichteten Blechen mit unterschiedlichen Ausnehmungen, wobei der Durchmesser der Ausnehmungen von einem Eintritt bis zu einem Austritt zum Schacht hin gesteigert wird. Hierdurch wird die Leistung der Pumpe gesteuert.

Von dem Schacht gelangt die Flüssigkeit dann in das Filtergehäuse, wobei in dem Filtergehäuse zuerst ein Vorraum vorgesehen ist, in dem sich gegebenenfalls schwere Partikel absetzen können. Auf diesen Vorraum folgt der 1. Filter, der bevorzugt ein Metallvlies ist. Dieses Metallvlies dient dazu, Partikel aus der Flüssigkeit auszuscheiden.

Das Metallvlies ist von einem Käfig umfangen, aus dem die Flüssigkeit gegebenenfalls zu einem 2. Filter gelangen kann. Dieser Filter ist so ausgelegt, dass er Geschmacks- bzw. Geruchsstoffe aus der Flüssigkeit entfernt. Beispielsweise kann es sich dabei um ein Granulat oder Pulver in einem Beutel handeln. Dieser 2. Filter ist nicht unbedingt notwendig, sofern beispielsweise in die Flüssigkeit vorher das Reinigungspulver eingestreut wird. Je nach Bedarf können im übrigen auch noch weitere Filterstufen vorgesehen werden.

In einem anderen Ausführungsbeispiel der Erfindung wird das Filtergehäuse an Schienen entlang dem Tauchgehäuse geführt. Das Filtergehäuse besteht dabei aus einem Schalenteil und einem Deckel, wobei beide über ein Scharnier miteinander verbunden sind. Nach dem Öffnen des Deckels kann in das Schalenteil ein gefalteter Filter eingelegt werden, bei dem die Filteroberfläche wesentlich erhöht ist.

Die Handhabung des Gerätes ist ausserordentlich einfach. Das Gerät wird in den Fritierkorb der Friteuse hineingestellt. Der Filtrationszyklus wird durch Tastendruck gestartet. Die Zykluszeit beträgt ca. 5 Minuten. Nach Beendigung der Filtration wird das Gerät in einer Abtropfwanne abgestellt. Selbstverständlich kann der Filtrationszyklus jederzeit durch Betätigen eines Stopp-Tasters unterbrochen werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht einer erfindungsgemässen Vorrichtung zum Reinigen von Flüssigkeiten;
Figur 2 einen Längsschnitt durch die Vorrichtung gemäss Figur 1;
Figur 3 eine Unteransicht der Vorrichtung gemäss Figur 1;
Figuren 4 und 5 eine Draufsicht auf zwei Ausführungsbeispiele von Rotorscheiben mit aufgesetzten Flügeln;
Figur 6 einen Längsschnitt durch ein weiteres Ausführungsbeispiel der Vorrichtung gemäss Figur 1.

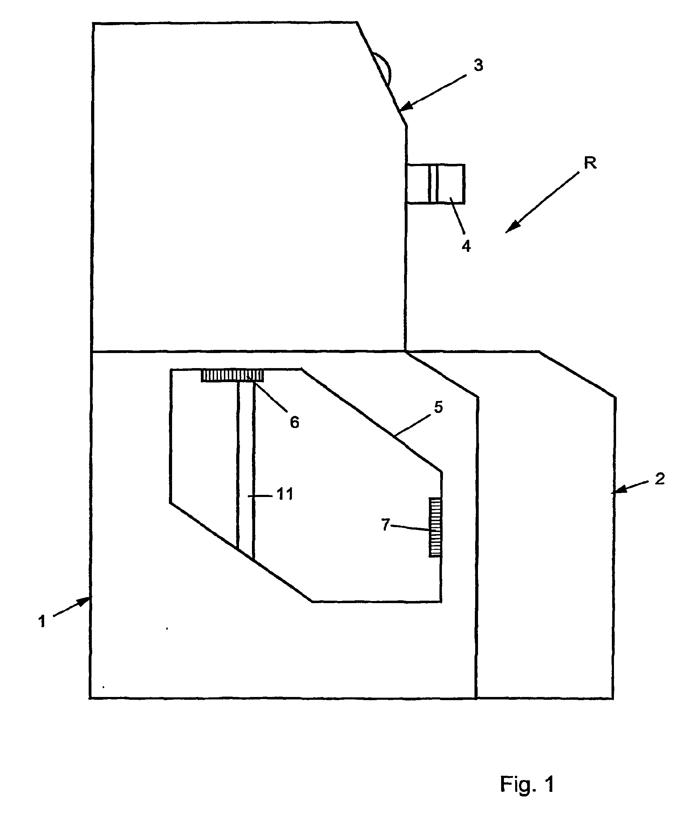

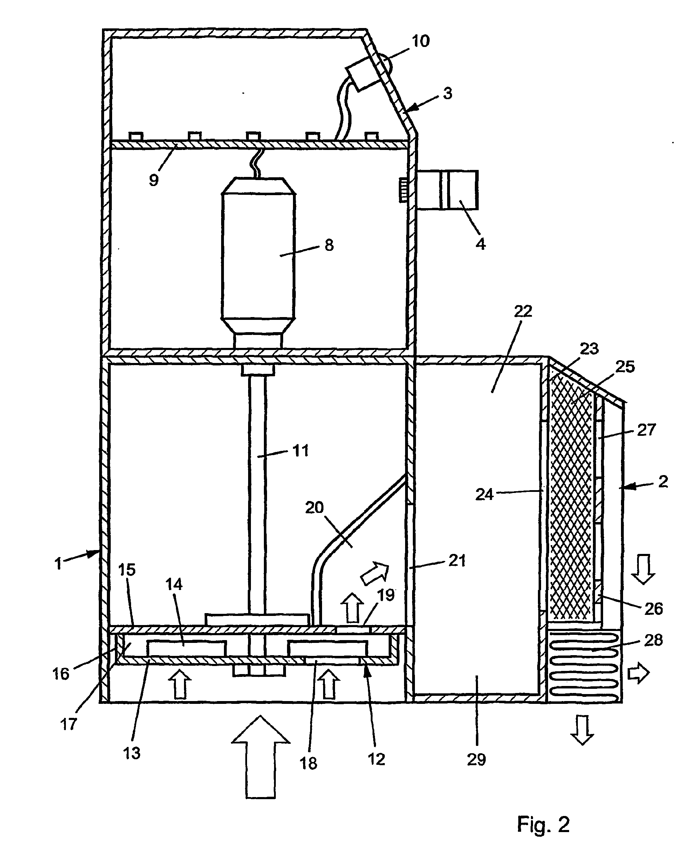

Eine erfindungsgemässe Vorrichtung zum Reinigen von Flüssigkeiten weist gemäss den Figuren 1 und 2 ein Tauchgehäuse 1 auf, mit dem seitlich ein Filtergehäuse 2 verbunden ist. Ferner ist auf das Tauchgehäuse 1 ein weiteres Gehäuse 3 aufgesetzt, an dem sich ein Griff 4 befindet, mit dem die gesamte Vorrichtung R transportiert werden kann.

Durch einen Ausschnitt 5 in dem Tauchgehäuse 1 sind Schnellspannmuttern 6 und 7 erkennbar, mit denen jeweils das Gehäuse 3 bzw. das Filtergehäuse 2 mit dem Tauchgehäuse 1 verbunden werden kann.

In dem Gehäuse 3 befindet sich gemäss Figur 2 ein Motor 8, dessen Steuerung von einer Elektronik 9 vorgenommen wird. Zum Betätigen sind entsprechende Bedienknöpfe 10 vorgesehen.
Der Motor 8 treibt über eine Stange 11, welche sich durch das Tauchgehäuse 1 erstreckt, einen Rotor 12 an, der im Wesentlichen aus einer Rotorscheibe 13 mit aufgesetzten Flügeln 14 besteht. Die Rotorscheibe 13 ist dabei unterhalb einer Zwischenwand 15 vorgesehen, wobei die Stange 11 diese Zwischenwand durchgreift. Durch die Zwischenwand 15, einen Ring 16 und den Rotor 12 wird ein Raum 17 gebildet, in den bei Drehung des Rotors 12 durch Ausnehmungen 18 in der Rotorscheibe 13 Flüssigkeit eingesaugt werden kann.

Diese Flüssigkeit wird dann durch einen Austritt 19 in einen Schacht 20 gedrückt, der sich noch in dem Tauchgehäuse 1 befindet. Aus dem Schacht 20 gelangt die Flüssigkeit durch ein Fenster 21 in das Filtergehäuse 2.

In dem Filtergehäuse 2 befindet sich ein Vorraum 22, der durch eine Zwischenwand 23 mit Öffnungen 24 von einem 1. Filter 25 getrennt ist. Bevorzugt handelt es sich bei diesem Filter um einen Metallfilter, beispielsweise um ein Edelstahlvlies. Dieser 1. Filter wird von einem Käfig 26 gefangen, der wiederum mit Öffnungen 27 versehen ist.

Unterhalb des Käfigs 26 befindet sich ein 2. Filter 28, der bevorzugt ein Filterbeutel mit einem Reinigungspulver darin ist.

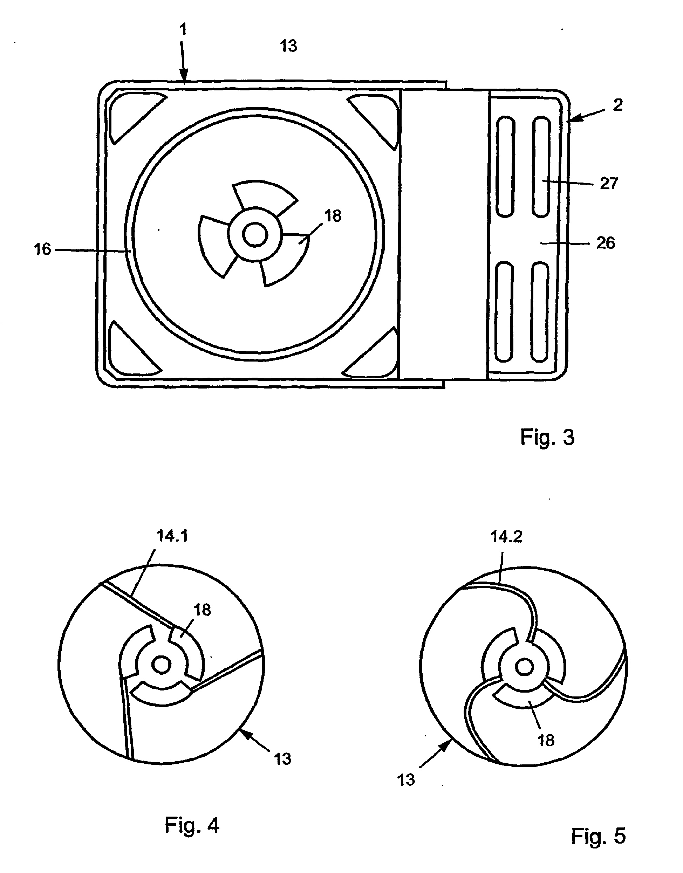

In den Figuren 4 und 5 sind zwei verschiedene Varianten von Flügeln 14.1 und 14.2 gezeigt. Die Flügel 14.1 sind gerade, während die Flügel 14.2 archimedisch sind.

Die Funktionsweise der vorliegenden Erfindung ist folgende:
Im zusammengebauten Zustand gemäss Figur 1 wird die erfindungsgemässe Vorrichtung R am Handgriff 4 erfasst und in eine zu reinigende Flüssigkeit eingesetzt. Dabei tauchen das Tauchgehäuse 1 und das Filtergehäuse 2 zumindest teilweise in die zu reinigende Flüssigkeit.

Nunmehr wird über den Bedienknopf 10 der Motor 8 in Gang gesetzt, welcher über die Stange 11 den Rotor 12 antreibt. Der Rotor 12 saugt mittels seiner Rotorflügeln 14 Flüssigkeit durch die Ausnehmungen 18 in den Raum 17, wie dies durch die entsprechenden Pfeile gekennzeichnet ist. Ferner drückt er die Flüssigkeit durch den Austritt 19 in den Schacht 20, von wo die Flüssigkeit in den Vorraum 22 des Filtergehäuses 2 gelangt. Von hier aus wird die Flüssigkeit durch den 1. Filter 25 hindurchgedrückt, welcher vor allem Partikel aus der Flüssigkeit ausfiltert. Diese Partikel können beispielsweise in einer im unteren Bereich des Vorraums 22 gebildeten Auffangwanne 29 gesammelt werden.

Aus dem 1. Filter 25 gelangt die Flüssigkeit durch die Öffnungen 27 zu dem 2. Filter 28, welcher insbesondere dazu bestimmt ist, Geruchs- bzw. Geschmacksstoffe aus der Flüssigkeit herauszufiltern. Danach gelangt die gereinigte Flüssigkeit wieder in das Flüssigkeitsbad zurück.

Nach Gebrauch kann die Vorrichtung R auf einfachste Art und Weise gereinigt werden. Durch Lösen der Schnellspannmuttern 6 und 7 ist es möglich, das Filtergehäuse 2 und das Gehäuse 3 von dem Tauchgehäuse 1 zu lösen. Insbesondere kann jetzt das Filtergehäuse 2 leicht gereinigt werden, wobei der 2. Filter 28 aus seinem Raum entfernt werden kann. Gegebenenfalls ist auch der Käfig 26 lösbar ausgestaltet.

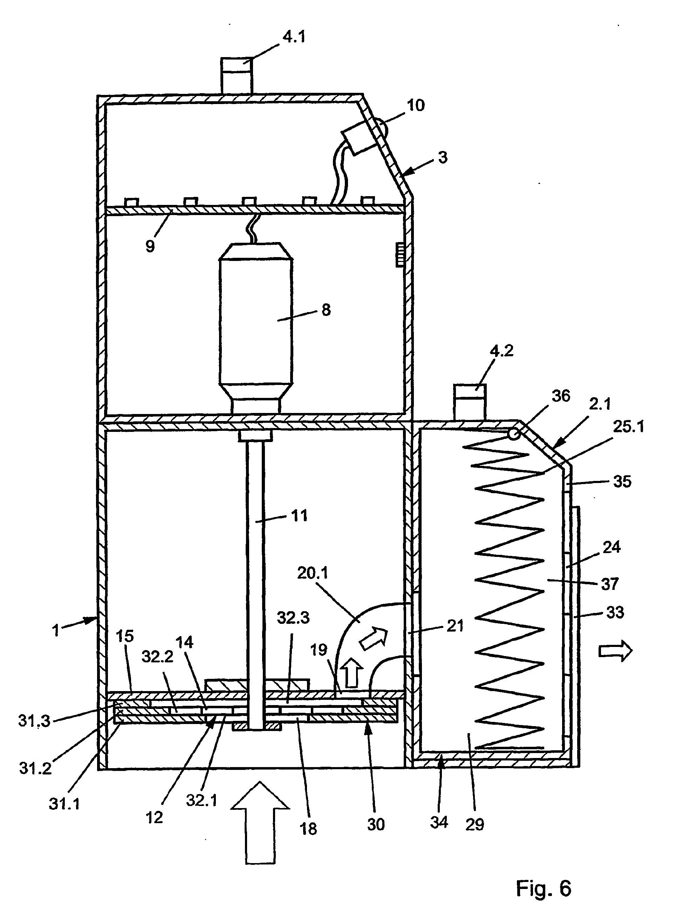

In einem weiteren Ausführungsbeispiel der Erfindung gemäss Figur 6 dreht der Rotor 12 innerhalb von einem Blechpaket 30, welches unterhalb der Zwischenwand 15 angeordnet ist. Dieses Blechpaket 30 besteht aus drei Blechen 31.1 bis 31.3, welche unterschiedliche Ausnehmungen 32.1 bis 32.2 aufweisen. Die Ausnehmung 32.1 ist etwa kreisförmig ausgestaltet und weist den geringsten Durchmesser auf. Die Ausnehmung in dem Blech 31.2 ist ebenfalls kreisförmig, hat jedoch einen grösseren Durchmesser als die Ausnehmung 32.1. Die Ausnehmung 32.3 in dem Blech 31.3 ist nur teilweise kreisförmig ausgestaltet und besitzt einerseits eine Verlängerung zu dem Schacht 20.1 hin. Dieser Schacht 20.1 ist im vorliegenden Ausführungsbeispiel eher als eine Rohrleitung ausgestaltet.

Das Filtergehäuse 2.1 ist in dem Ausführungsbeispiel gemäss Figur 6 entfernbar ausgestaltet, indem es in Schienen 33 eingesetzt wird, welche mit dem Tauchgehäuse 1 verbunden sind. Zum Lösen aus den Schienen 33 wird das Filtergehäuse 2.1 an dem Handgriff 4.2 nach oben gezogen.

Ferner besteht das Filtergehäuse 2.1 aus einem Schalenteil 34 und einem Deckel 35, wobei Schalenteil 34 und Deckel 35 über ein Scharnier 36 miteinander verbunden sind. Durch Aufklappen des Deckels 35 wird ein Zugriff zu einem Innenraum 37 des Filtergehäuses 2.1 freigegeben, indem ein in Falten gelegter, plessierter Filter 25.1 eingesetzt ist. Durch dieses in Falten legen wird die Oberfläche des Filters 25.1 wesentlich vergrössert.

In dem Schalenteil 34 befinden sich nicht näher gezeigte Halterungen für den Filter 25.1, welche so ausgestaltet sind, dass sie dem Filter 25.1 die genügende Festigkeit geben.

Nach dem Durchströmen des Filters 25.1 tritt die gereinigte Flüssigkeit durch die Öffnungen 24 aus und gelangt in das Reinigungsbad zurück, wie dies durch den Pfeil angedeutet ist.

**Positionszahlenliste**

| | | | | | |
|---|---|---|---|---|---|
| 1 | Tauchgehäuse | 34 | Schalenteil | 67 | |
| 2 | Filtergehäuse | 35 | Deckel | 68 | |
| 3 | Gehäuse | 36 | Scharnier | 69 | |
| 4 | Griff | 37 | Innenraum | 70 | |
| 5 | Ausschnitt | 38 | | 71 | |
| 6 | Schnellspanmutter | 39 | | 72 | |
| 7 | Schnellspannmutter | 40 | | 73 | |
| 8 | Motor | 41 | | 74 | |
| 9 | Elektronik | 42 | | 75 | |
| 10 | Bedienknopf | 43 | | 76 | |
| 11 | Stange | 44 | | 77 | |
| 12 | Rotor | 45 | | 78 | |
| 13 | Rotorscheibe | 46 | | 79 | |
| 14 | Flügel | 47 | | | |
| 15 | Zwischenwand | 48 | | | |
| 16 | Ring | 49 | | | |
| 17 | Raum | 50 | | | |
| 18 | Ausnehmung | 51 | | | |
| 19 | Austritt | 52 | | | |
| 20 | Schacht | 53 | | | |
| 21 | Fenster | 54 | | | |
| 22 | Vorraum | 55 | | | |
| 23 | Zwischenwand | 56 | | | |
| 24 | Öffnung | 57 | | | |
| 25 | 1. Filter | 58 | | | |
| 26 | Käfig | 59 | | R | Vorrichtung |
| 27 | Öffnung | 60 | | | |
| 28 | 2. Filter | 61 | | | |
| 29 | Auffangwanne | 62 | | | |
| 30 | Blechpaket | 63 | | | |
| 31 | Blech | 64 | | | |
| 32 | Ausnehmung | 65 | | | |
| 33 | Schienen | 66 | | | |

## Patentansprüche

1. Vorrichtung zum Reinigen von Flüssigkeiten, insbesondere von Speiseölen, mittels eines Filters (25, 25.1) in einem Filtergehäuse (2, 2.1), wobei der Filter (25, 25.1) einer Pumpe (8, 11, 12) nachgeschaltet und in einem Gehäuse (3) ein Motor (8) zum Antreiben der Pumpe (11, 12) vorgesehen ist, die einen Rotor (12) mit einer Rotorscheibe (13) in einem Tauchgehäuse (1) aufweist, wobei das Gehäuse (3), Tauchgehäuse (1) und Filtergehäuse (2, 2.1) zusammen eine Einheit bilden und zumindest teilweise in die zu reinigende Flüssigkeit einsetzbar und aus dieser entfernbar sind, wobei das Tauchgehäuse (1) über einen Schacht (20, 20.1) mit dem Filtergehäuse (2, 2.1) verbunden ist,
**dadurch gekennzeichnet,**
**dass** der Rotor (12) mit Flügeln (14, 14.1, 14.2) zum Ansaugen der Flüssigkeit durch Ausnehmungen (18) in der Rotorscheibe (13) und zum Weiterdrücken der Flüssigkeit in den Schacht (20, 20.1) besetzt ist, wobei zwischen Schacht (20, 20.1) und Filter (25, 25.1) ein Vorraum (22) in dem Filtergehäuse (2, 2.1) ausgebildet und dieses Filtergehäuse (2, 2.1) dem Tauchgehäuse (1) entfernbar zugeordnet ist.

2. Vorrichtung nach Anspruch 1, **dadurch gekennzeichnet, dass** die Rotorscheibe (13) unterhalb einer Zwischenwand (15) und in einem Ring (16) angeordnet ist.

3. Vorrichtung nach Anspruch 1 oder 2, **dadurch gekennzeichnet, dass** der Rotor (12) in einem Blechpaket (30) dreht, wobei die Bleche (31.1 - 31.3) unterschiedliche Ausnehmungen (32.1 - 32.3) aufweisen.

4. Vorrichtung nach Anspruch 3, **dadurch gekennzeichnet, dass** die Ausnehmungen (32.1 - 32.3) sich zu einem Schacht (20.1) hin vergrössern.

5. Vorrichtung nach einem der Ansprüche 2 - 4, **dadurch gekennzeichnet, dass** in der Zwischenwand (15) ein Austritt (19) zu dem Schacht (20, 20.1) vorgesehen ist.

6. Vorrichtung nach wenigstens einem.der Ansprüche 1 bis 5, **dadurch gekennzeichnet, dass** das Filtergehäuse (2) über Schnellspannelemente (7) mit dem Tauchgehäuse (1) verbunden ist.

7. Vorrichtung nach wenigstens einem der Ansprüche 1 bis 6, **dadurch gekennzeichnet, dass** das Filtergehäuse an Schienen (33) an dem Tauchgehäuse (1) geführt ist.

8. Vorrichtung nach wenigstens einem der Ansprüche 1 - 7, **dadurch gekennzeichnet, dass** der Filter (25) ein Metallfilter ist.

9. Vorrichtung nach wenigstens einem Ansprüche 1 - 8, **dadurch gekennzeichnet, dass** dem einen Filter (25) ein zweiter Filter (28) nachgeordnet ist.

10. Vorrichtung nach wenigstens einem der Ansprüche 1 - 9, **dadurch gekennzeichnet, dass** der Filter (25.1) aus einem plissierten textilen Werkstoff besteht.

11. Vorrichtung nach wenigstens einem der Ansprüche 1 bis 10, **dadurch gekennzeichnet, dass** an dem Gehäuse (3) und/oder dem Filtergehäuse (2.1) ein Handgriff (4, 4.1, 4.2) zum Transport bzw. zum Entfernen vorgesehen ist.

12. Vorrichtung nach wenigstens einem der Ansprüche 1 - 11, **dadurch gekennzeichnet, dass** das Gehäuse (3) auf dem Tauchgehäuse (1) aufsitzt, welches den Rotor (12) beinhaltet.

13. Vorrichtung nach Anspruch 12, **dadurch gekennzeichnet, dass** das Tauchgehäuse (1) über Schnellspannelemente (6) mit dem Gehäuse (3) verbunden ist.

## Claims

1. Device for purifying liquids, in particular edible oils, by means of a filter (25, 25.1) in a filter housing (2, 2.1), wherein the filter (25, 25.1) is disposed downstream of a pump (8, 11, 12) and in a housing (3) a motor (8) is provided for driving the pump (11, 12), which comprises a rotor (12) with a rotor disk (13) in an immersion housing (1), wherein the housing (3), immersion housing (1) and filter housing (2, 2.1) together form a unit and are at least partially insertable into and removable from the liquid to be purified, wherein the immersion housing (1) is connected by a shaft (20, 20.1) to the filter housing (2, 2.1)
**characterized in**
**that** the rotor (12) is equipped with blades (14, 14.1, 14.2) for intake of the liquid through recesses (18) in the rotor disk (13) and for further pressing of the liquid into the shaft (20, 20.1), wherein between shaft (20, 20.1) and filter (25, 25.1) an antechamber (22) is formed in the filter housing (2, 2.1) and this filter housing (2, 2.1) is removably associated with the immersion housing (1).

2. Device according to claim 1, **characterized in that** the rotor disk (13) is disposed underneath a partition wall (15) and in a ring (16).

3. Device according to claim 1 or 2, **characterized in that** the rotor (12) rotates in a sheet stack (30), wherein the sheets (31.1 - 31.3) have differing recesses (32.1 - 32.3).

4. Device according to claim 3, **characterized in that** the recesses (32.1 - 32.3) increase in size in the direction of a shaft (20.1).

5. Device according to one of claims 2 - 4, **characterized in that** in the partition wall (15) an outlet (19) to the shaft (20, 20.1) is provided.

6. Device according to at least one of claims 1 to 5, **characterized in that** the filter housing (2) is connected by quick-action clamping elements (7) to the immersion housing (1).

7. Device according to at least one of claims 1 to 6, **characterized in that** the filter housing runs on rails (33) at the immersion housing (1).

8. Device according to at least one of claims 1-7, **characterized in that** the filter (25) is a metal filter.

9. Device according to at least one of claims 1-8, **characterized in that** disposed downstream of the one filter (25) is a second filter (28).

10. Device according to at least one of claims 1-9, **characterized in that** the filter (25.1) is made of a pleated textile material.

11. Device according to at least one of claims 1 to 10, **characterized in that** on the housing (3) and/or the filter housing (2.1) a handle (4, 4.1, 4.2) is provided for transport and/or removal purposes.

12. Device according to at least one of claims 1-11, **characterized in that** the housing (3) rests on the immersion housing (1) that contains the rotor (12).

13. Device according to claim 12, **characterized in that** the immersion housing (1) is connected by quick-action clamping elements (6) to the housing (3).

## Revendications

1. Dispositif pour purifier des liquides, en particulier des huiles comestibles, au moyen d'un filtre (25, 251) dans un boîtier de filtre (2, 2.1), le filtre (25, 25.1) étant connecté en aval d'une pompe (8, 11, 12) et dans un boîtier (3) étant prévu un moteur (8) destiné à entraîner la pompe (11, 12), et présentant un rotor (12) avec un disque de rotor (13) dans un boîtier immersible (1), le boîtier (3), le boîtier immersible (1) et le boîtier de filtre (2, 2.1) formant ensemble une unité et pouvant être placé au moins partiellement dans le liquide à purifier et pouvant être sorti de ce dernier, le boîtier immersible (1) étant relié, par l'intermédiaire d'une cheminée (20, 20.1) au boîtier de filtre (2, 2.1),
**caractérisé par le fait que**
le rotor (12) étant équipé d'ailettes (14, 14.1, 14.2) destinées à aspirer le liquide à travers des évidements (18) dans le disque de rotor (13) et à pousser le liquide dans la cheminée (20, 20.1), entre la cheminée (20, 20.1) et le filtre (25, 25.1) étant réalisée une préchambre (22) dans le boîtier de filtre (2, 2.1) et ce boîtier de filtre (2, 2.1) étant associé de manière amovible au boîtier immersible (1).

2. Dispositif selon la revendication 1, **caractérisé par le fait que** le disque de rotor (13) est disposé sous une paroi intermédiaire (15) et dans un anneau (16).

3. Dispositif selon la revendication 1 ou 2, **caractérisé par le fait que** le rotor (12) tourne dans un paquet de tôles (30), les tôles (31.1 à 31.3) présentant des évidements différents (32.1 à 32.3).

4. Dispositif selon la revendication 3, **caractérisé par le fait que** les évidements (32.1 à 32.3) s'agrandissent en direction d'une cheminée (20.1).

5. Dispositif selon l'une des revendications 2 à 4, **caractérisé par le fait que** dans la paroi intermédiaire (15) est prévue une sortie (19) vers la cheminée (20, 20.1).

6. Dispositif selon au moins l'une des revendications 1 à 5, **caractérisé par le fait que** le boîtier de filtre (3) et connecté au boîtier immersible (1) par l'intermédiaire d'éléments de serrage rapide (7).

7. Dispositif selon au moins l'une des revendications 1 à 6, **caractérisé par le fait que** le boîtier de filtre est guidé sur des rails (33) sur le boîtier immersible (1).

8. Dispositif selon au moins l'une des revendications 1 à 7, **caractérisé par le fait que** le filtre (25) est un filtre métallique.

9. Dispositif selon au moins l'une des revendications 1 à 8, **caractérisé par le fait qu'**après le filtre (25) est disposé un deuxième filtre (28).

10. Dispositif selon au moins l'une des revendications 1 à 9, **caractérisé par le fait que** le filtre (25.1) est réalisé en un matériau textile plissé.

11. Dispositif selon au moins l'une des revendications 1 à 10, **caractérisé par le fait que** sur le boîtier (3) et/ou le boîtier de filtre (2.1) est prévue une poignée (4, 4.1, 4.2) destinée au transport ou au retrait.

12. Dispositif selon au moins l'une des revendications 1 à 11, **caractérisé par le fait que** le boîtier (3) se trouve sur le boîtier immersible (1), contenant le rotor (12).

13. Dispositif selon la revendication 13, **caractérisé par le fait que** le boîtier immersible (1) est connecté au boîtier (3) par l'intermédiaire d'éléments de serrage rapide (6).
